# EUROPEAN PATENT SPECIFICATION

(11) **EP 3 812 979 B1**
(45) Date of publication and mention of the grant of the patent: **02.08.2023**
(21) Application number: 19907509.4
(22) Date of filing: 17.12.2019
(51) Int. Cl.: G06Q 10/083, G06Q 10/08, G06Q 50/30

(54) **AUTONOMOUS OPERATION METHOD AND DEVICE FOR UNMANNED LOGISTICS VEHICLE, AND STORAGE MEDIUM**
AUTONOMES BETRIEBSVERFAHREN UND VORRICHTUNG FÜR UNBEMANNTES LOGISTIKFAHRZEUG UND SPEICHERMEDIUM
PROCÉDÉ ET DISPOSITIF D'OPÉRATION AUTONOME D'UN VÉHICULE DE LOGISTIQUE SANS PILOTE ET SUPPORT DE STOCKAGE

(30) Priority: 04.01.2019 CN 201910007932
(43) Date of publication of application: 28.04.2021
(73) Proprietor: Apollo Intelligent Driving Technology (Beijing) Co., Ltd., Haidian District Beijing 100085 (CN)
(72) Inventor: YU, Ning, Beijing 100085 (CN); YANG, Fan, Beijing 100085 (CN); LV, Leibing, Beijing 100085 (CN); WANG, Chengfa, Beijing 100085 (CN); WANG, Junping, Beijing 100085 (CN)
(74) Representative: dompatent von Kreisler Selting Werner - Partnerschaft von Patent- und Rechtsanwälten mbB
(86) International application number: PCT/CN2019/125988
(87) International publication number: WO 2020/140746

(56) References cited:
- CN-A- 107 767 496
- CN-A- 108 765 766
- CN-A- 108 776 482
- CN-A- 108 958 259
- CN-A- 109 816 156
- US-A1- 2015 006 005
- US-A1- 2018 086 348
- US-A1- 2019 004 539

## Description

### Field of the Disclosure

The present disclosure relates to computer application technologies, and particularly to a method, apparatus and storage medium for autonomous operation of an unmanned logistics vehicle.

### Background of the Disclosure

With the development of technologies, unmanned vehicles are applied in an increasingly wider scope, for example, unmanned logistics vehicles may be used to transport cargo.

At present, the development and research of the unmanned logistics vehicles is in a relatively primary stage. During transport of cargo by the unmanned logistics vehicles, many sections need to be manually operated/assisted, for example, a cargo loading location and a cargo unloading location need to be set artificially, and the cargo compartment door needs to be opened manually to load and unload cargo, which not only increases man power costs and reduces the efficiency of transporting cargo.

A patent application CN108765766A, published on November 06, 2018, entitled "Intelligent unmanned fruit and vegetable product transport vehicle and sharing system", describes a transport vehicle having a chassis equipped with an automatic operation system for unmanned driving. It describes the process of the transport vehicle automatically driving to the designated location, calculating commodity prices and automatically making payments, and returning to the standby position.

### Summary of the Disclosure

In view of the above, the present disclosure provides a method, apparatus and storage medium for autonomous operation of an unmanned logistics vehicle.

The invention relates to a method for autonomous operation of an unmanned logistics vehicle as defined in the independent claim 1 and an apparatus for autonomous operation of an unmanned logistics vehicle as defined in the independent claim 3 and a computer-readable storage medium as defined in the independent claim 5.

### Brief Description of Drawings

Fig. 1 is a flow chart of a first embodiment of a method for autonomous operation of an unmanned logistics vehicle according to the present disclosure.
Fig. 2 is a flow chart of a second embodiment of a method for autonomous operation of an unmanned logistics vehicle according to the present disclosure.
Fig. 3 is a flow chart of a third embodiment of a method for autonomous operation of an unmanned logistics vehicle according to the present disclosure.
Fig. 4 is a schematic diagram of an overall implementation process of a method for autonomous operation of an unmanned logistics vehicle according to the present disclosure.
Fig. 5 is a structural schematic diagram of an embodiment of an apparatus for autonomous operation of an unmanned logistics vehicle according to the present disclosure.
Fig. 6 illustrates a block diagram of an example computer system/server 12 adapted to implement an implementation mode of the present disclosure.

### Detailed Description of Preferred Embodiments

Technical solutions of the present disclosure will be described in more detail in conjunction with figures and embodiments to make technical solutions of the present disclosure clear and more apparent.

Obviously, the described embodiments are partial embodiments of the present disclosure, not all embodiments. Based on embodiments in the present disclosure, all other embodiments obtained by those having ordinary skill in the art without making inventive efforts all fall within the protection scope of the present disclosure.

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

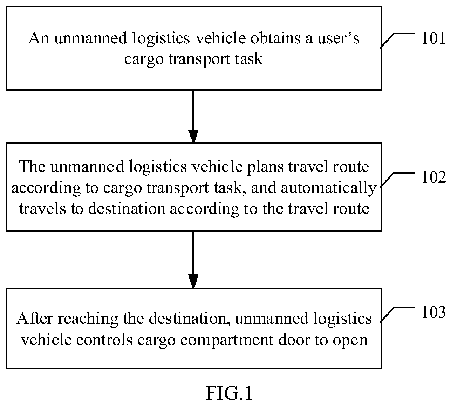

Fig. 1 is a flow chart of a first embodiment of a method for autonomous operation of an unmanned logistics vehicle according to the present disclosure. As shown in Fig. 1, the embodiment comprises the following specific implementation mode.

At 101, an unmanned logistics vehicle obtains a user's cargo transport task.

At 102, the unmanned logistics vehicle plans a travel route according to the cargo transport task, and automatically travels to a destination according to the travel route.

At 103, after reaching the destination, the unmanned logistics vehicle controls a cargo compartment door to open.

When the user has a demand to transport cargo, he may place an order in a certain manner. The specific manner of the manner is not limited here. For example, the user may place an order on a mobile phone mobile terminal, or place an order on an order-placing platform through a Personal Computer (PC), wherein an order may be placed on the mobile phone mobile terminal via a WeChat mini program, or by paying attention to a WeChat public number.

When the user places an order, he needs to duly set a cargo loading location and a cargo unloading location. After obtaining the cargo transport task, the unmanned logistics vehicle may plan the travel route according to the cargo transport task and automatically travel to the destination according to the planned travel route.

Usually, as for a cargo transport task, the unmanned logistics vehicle needs to plan the travel route twice, wherein for the first time, the unmanned logistics vehicle plans the travel route from the current location to the cargo loading location, and wherein for the second time, the unmanned logistics vehicle plans the travel route from the cargo loading location to the cargo unloading location.

That is to say, after obtaining the cargo transport task, the unmanned logistics vehicle may plan the travel route from the current location to the cargo loading location by setting the current location as a starting point and setting the cargo loading location as the destination, and automatically travel to the cargo loading location to load the cargo according to the planned travel route. After determining completion of the loading of the cargo, the unmanned logistics vehicle may plan the travel route from the cargo loading location to the cargo unloading location by setting the cargo loading location as the starting point and setting the cargo unloading location as the destination, and automatically travel to the cargo unloading location to unload the cargo according to the planned travel route.

While autonomous travel of the unmanned logistics vehicle, when the unmanned logistics vehicle approaches the destination, namely, when the distance away from the destination is less than a preset threshold, arrival reminding may be performed in a predetermined manner to notify workers at the destination to prepare to load or unload the cargo.

After reaching the destination, the unmanned logistics vehicle may automatically control the cargo compartment door to open so that the workers at the destination loads or unloads the cargo. After determining the completion of cargo loading or cargo unloading, the unmanned logistics vehicle may further automatically control the cargo compartment door to close.

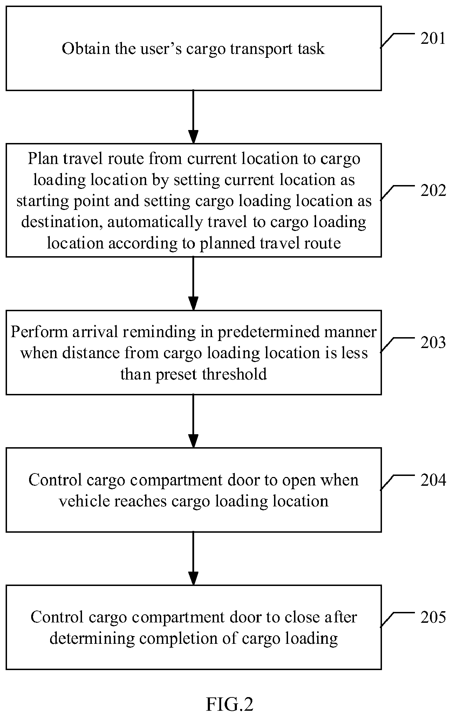

Based on the above introduction, Fig. 2 is a flow chart of a second embodiment of a method for autonomous operation of an unmanned logistics vehicle according to the present disclosure. As shown in Fig. 2, the embodiment comprises the following specific implementation mode.

At 201, obtain the user's cargo transport task.

At 202, plan a travel route from a current location to a cargo loading location by setting the current location as a starting point and setting the cargo loading location in the cargo transport task as a destination, and automatically travel to the cargo loading location according to the planned travel route.

The planned travel route from the current location to the cargo loading location may refer to a travel route with the shortest distance from the current location to the cargo loading location, or may refer to a travel route with the shortest travel time from the current location to the cargo loading location.

The unmanned logistics vehicle may automatically travel to the cargo loading location to load the cargo according to the planned travel route.

At 203, perform arrival reminding in a predetermined manner when a distance from the cargo loading location is less than a preset threshold.

While the unmanned logistics vehicle goes to the cargo loading location, arrival reminding may be performed in a predetermined manner when a distance from the cargo loading location is less than the preset threshold.

For example, while the unmanned logistics vehicle goes to the cargo loading location, it is possible to periodically judge the distance between the current location and the cargo loading location, and perform arrival reminding in a predetermined manner, namely, remind the workers at the cargo loading location to prepare to load the cargo, when the distance is less than a preset threshold.

A specific value of the threshold may depend on actual needs, for example, may be 20m or 10m.

The specific manner meant by the predetermined manner is not limited here, and may depend on actual needs. For example, the predetermined manner may be a whistling manner in which the vehicle whistles to remind the workers at the cargo loading location that the vehicle will arrive very soon and remind the workers to get prepared to load the cargo. Alternatively, the predetermine manner may also be a manner in which a specific indicator lamp is flashing, or a manner in which words are displayed on the screen.

At 204, control the cargo compartment door to open when the vehicle reaches the cargo loading location.

After reaching the cargo loading location and stopping duly, the unmanned logistics vehicle may automatically control the cargo compartment door to open so that the workers at the cargo loading location load the cargo. The loading workers may be human beings or robots.

At 205, control the cargo compartment door to close after determining completion of the cargo loading.

The unmanned logistics vehicle may determine whether the loading is completed in a predetermined manner.

For example, if a notification of completion of cargo loading sent from a predetermined APP is received, completion of the cargo loading may be determined. After the cargo loading is completed, the workers at the cargo loading location may interact with the unmanned logistics vehicles by operating the APP installed on the mobile phone, and notify the unmanned logistics vehicle that the cargo loading is completed.

As another example, if a predetermined gesture to the effect that the cargo loading is completed is monitored, the completion of the cargo loading may be determined. After the completion of the cargo loading, the workers at the cargo loading location may give a predetermined gesture to the effect that the cargo loading is completed. After a camera on the unmanned logistics vehicle acquires the gesture, the completion of the cargo loading may be determined.

As another example, if a speech instruction to the effect that the cargo loading is completed is received, the completion of the cargo loading may be determined. After the completion of the cargo loading, the workers at the cargo loading location may issue a speech instruction to the effect that the cargo loading is completed, to notify the unmanned logistics vehicle that the cargo loading is completed.

As another example, if it is monitored that a predetermined button on the unmanned logistics vehicle is pressed, the completion of the cargo loading may be determined. A button may be disposed at a certain position of the vehicle body of the unmanned logistics vehicle. After completing cargo loading, the workers at the cargo loading location may press the button, to notify the unmanned logistics vehicle that the cargo loading is completed.

After determining that the cargo loading is completed, the unmanned logistics vehicle may automatically control the cargo compartment door to close.

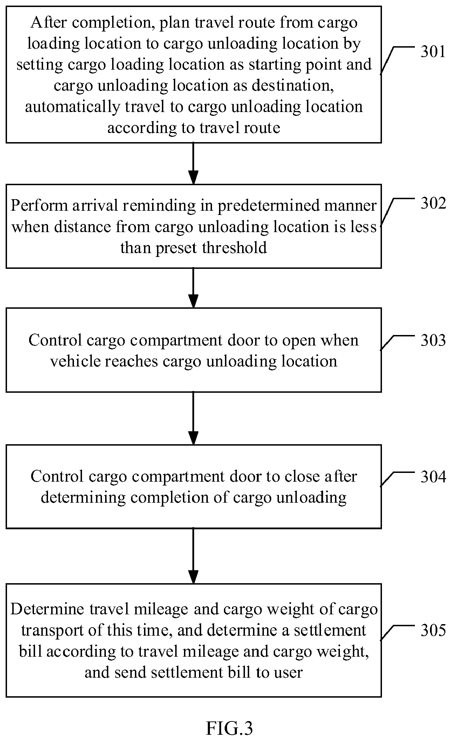

Fig. 3 is a flow chart of a third embodiment of a method for autonomous operation of an unmanned logistics vehicle according to the present disclosure. As shown in Fig. 3, the embodiment comprises the following specific implementation mode.

At 301, after determining completion of the loading of the cargo, plan a travel route from the cargo loading location to the cargo unloading location by setting the cargo loading location as the starting point and setting the cargo unloading location in the cargo transport task as the destination, and automatically travel to the cargo unloading location according to the planned travel route.

The planned travel route from the cargo loading location to the cargo unloading location may refer to a travel route with the shortest distance from the cargo loading location to the cargo unloading location, or may refer to a travel route with the shortest travel time from the cargo loading location to the cargo unloading location.

The unmanned logistics vehicle may automatically travel to the cargo unloading location to unload the cargo according to the planned travel route.

At 302, perform arrival reminding in a predetermined manner when a distance from the cargo unloading location is less than a preset threshold.

While the unmanned logistics vehicle goes to the cargo unloading location, arrival reminding may be performed in a predetermined manner when a distance from the cargo unloading location is less than the preset threshold.

The specific manner meant by the predetermined manner is not limited here. For example, the predetermined manner may be a whistling manner in which the vehicle whistles to remind the workers at the cargo unloading location that the vehicle will arrive very soon and remind the workers to get prepared to unload the cargo. Alternatively, the predetermine manner may also be a manner in which a specific indicator lamp is flashing, or a manner in which words are displayed on the screen.

At 303, control the cargo compartment door to open when the vehicle reaches the cargo unloading location.

After reaching the cargo unloading location and stopping duly, the unmanned logistics vehicle may automatically control the cargo compartment door to open so that the workers at the cargo unloading location unload the cargo.

At 304, control the cargo compartment door to close after determining completion of the cargo unloading.

The unmanned logistics vehicle may determine whether the unloading is completed in a predetermined manner. For example, if a notification of completion of cargo unloading sent from a predetermined APP is received, completion of the cargo unloading may be determined. As another example, if a predetermined gesture to the effect that the cargo unloading is completed is monitored, the completion of the cargo unloading may be determined. As another example, if a speech instruction to the effect that the cargo unloading is completed is received, the completion of the cargo loading may be determined. As another example, if it is monitored that a predetermined button on the unmanned logistics vehicle is pressed, the completion of the cargo unloading may be determined.

After determining that the cargo unloading is completed, the unmanned logistics vehicle may automatically control the cargo compartment door to close.

At 305, determine a travel mileage and a cargo weight of cargo transport of this time, and determine a settlement bill according to the travel mileage and the cargo weight, and send the settlement bill to the user.

The unmanned logistics vehicle may obtain the cargo weight with a weight sensor, or calculate the cargo weight based on vehicle dynamics. Specific implementation modes are not limited.

It is possible to calculate the settlement bill by a preset calculation rule according to the travel mileage and cargo weight, and send the settlement bill to the user so that the user completes payment according to the settlement bill.

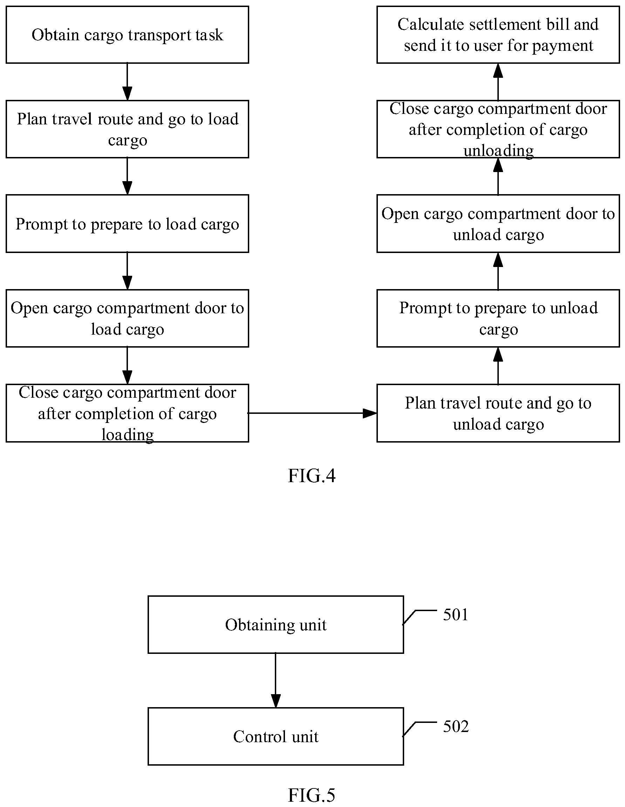

To conclude the above introduction, Fig. 4 is a schematic diagram of an overall implementation process of a method for autonomous operation of an unmanned logistics vehicle according to the present disclosure. As shown in Fig. 4, after obtaining the user's cargo transport task, the unmanned logistics vehicle may plan the travel route from the current location to the cargo loading location by setting the current location as a starting point and setting the cargo loading location in the cargo transport task as the destination, and automatically travel to the cargo loading location to load the cargo according to the planned travel route, wherein when it is determined that the distance from the cargo loading location is less than a preset threshold, a prompt is provided in a predetermined manner to remind the workers to prepare to load the cargo; after reaching the cargo loading location, the unmanned logistics vehicle may control the cargo compartment door to open for cargo loading; after completing cargo loading, the unmanned logistics vehicle controls the cargo compartment door to close; after determining completion of the loading of the cargo, the unmanned logistics vehicle plans the travel route from the cargo loading location to the cargo unloading location by setting the cargo loading location as the starting point and setting the cargo unloading location in the cargo transport task as the destination, and automatically travels to the cargo unloading location to unload the cargo according to the planned travel route. When it is determined that the distance from the cargo unloading location is less than a preset threshold, a prompt is provided in a predetermined manner to remind the workers to prepare to unload the cargo; after reaching the cargo unloading location, the unmanned logistics vehicle may control the cargo compartment door to open for cargo unloading; after completing cargo unloading, the unmanned logistics vehicle may control the cargo compartment door to close; the unmanned logistics vehicle may calculate a settlement bill and send the settlement bill to the user so that the user pays the fee and the cargo transport task of the this time is completed.

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, embodiments are respectively described with different emphasis being placed, and reference may be made to related depictions in other embodiments for portions not detailed in a certain embodiment.

To conclude, according to the solution of the method embodiment of the present disclosure, the unmanned logistics vehicle, after obtaining the user's cargo transport task, may automatically plan a travel route according to the cargo transport task and automatically travels to the destination according to the travel route; after reaching the destination, the unmanned logistics vehicle may automatically control the cargo compartment door to open; after the complement of cargo loading or cargo unloading, the unmanned logistic vehicle may automatically control the cargo compartment door to close, thereby omitting many manual operations, saving man power costs and improving the cargo transport efficiency.

The above introduces the method embodiments. The solution of the present disclosure will be further described through an apparatus embodiment.

Fig. 5 is a structural schematic diagram of an embodiment of an apparatus for autonomous operation of an unmanned logistics vehicle according to the present disclosure. As shown in Fig. 5, the apparatus comprises: an obtaining unit 501 and a control unit 502.

The obtaining unit 501 is configured obtain a user's cargo transport task.

The control unit 502 is configured to plan a travel route according to the cargo transport task, control the unmanned logistics vehicle to automatically travel to a destination according to the travel route, and after the unmanned logistics vehicle reaching the destination, control a cargo compartment door of the unmanned logistics vehicle to open.

Usually, as for a cargo transport task, the unmanned logistics vehicle needs to plan the travel route twice, wherein for the first time, the unmanned logistics vehicle plans the travel route from the current location to the cargo loading location, and wherein for the second time, the unmanned logistics vehicle plans the travel route from the cargo loading location to the cargo unloading location.

Specifically, the control unit 502 may plan the travel route from the current location to the cargo loading location by setting the current location as a starting point and setting the cargo loading location in the cargo transport task as the destination, and control the unmanned logistics vehicle to automatically travel to the cargo loading location according to the planned travel route; after determining completion of the loading of the cargo, plan the travel route from the cargo loading location to the cargo unloading location by setting the cargo loading location as the starting point and setting the cargo unloading location as the destination, and control the unmanned logistics vehicle to automatically travel to the cargo unloading location according to the planned travel route.

While autonomous travel of the unmanned logistics vehicle, when it is determined that the distance away from the destination is less than a preset threshold, the control unit 502 may perform arrival reminding in a predetermined manner to notify workers at the destination to prepare to load or unload the cargo. For example, the control unit 502 may perform arrival reminding in a manner such as in a whistling manner, a manner in which a specific indicator lamp is flashing, or a manner in which words are displayed on the screen.

After the unmanned logistics vehicle reaches the cargo loading location, the control unit 502 may automatically control the cargo compartment door to open so that the workers at the cargo loading location load the cargo; After the unmanned logistics vehicle reaches the cargo unloading location, the control unit 502 may automatically control the cargo compartment door to open so that the workers at the cargo unloading location unload the cargo.

In addition, after the unmanned logistics vehicle reaches the cargo loading location, if completion of cargo loading is determined, the control unit 502 may automatically control the cargo compartment door to open; after the unmanned logistics vehicle reaches the cargo unloading location, if completion of cargo unloading is determined, the control unit 502 may automatically control the cargo compartment door to close.

The manner in which the control unit 502 determines completion of cargo loading may be receiving a notification of completion of cargo loading sent from a predetermined APP, or monitoring a predetermined gesture to the effect that the cargo loading is completed, or receiving a speech instruction to the effect that the cargo loading is completed, or monitoring that a predetermined button on the unmanned logistics vehicle is pressed.

Similarly, the manner in which the control unit 502 determines completion of cargo unloading may be receiving a notification of completion of cargo unloading sent from a predetermined APP, or monitoring a predetermined gesture to the effect that the cargo unloading is completed, or receiving a speech instruction to the effect that the cargo unloading is completed, or monitoring that a predetermined button on the unmanned logistics vehicle is pressed.

In addition, after determining that the cargo unloading is completed, the control unit 502 may further determine a travel mileage and a cargo weight of cargo transport of this time, and determine a settlement bill according to the travel mileage and the cargo weight, and send the settlement bill to the user.

Reference may be made to corresponding depictions in the aforesaid method embodiment for a specific workflow of the apparatus embodiment shown in Fig. 5. The workflow is not detailed any more.

To conclude, according to the solution of the apparatus embodiment of the present disclosure, the unmanned logistics vehicle, after obtaining the user's cargo transport task, may automatically plan a travel route according to the cargo transport task and automatically travels to the destination according to the travel route; after reaching the destination, the unmanned logistics vehicle may automatically control the cargo compartment door to open; after the complement of cargo loading or cargo unloading, the unmanned logistic vehicle may automatically control the cargo compartment door to close, thereby omitting many manual operations, saving man power costs and improving the cargo transport efficiency.

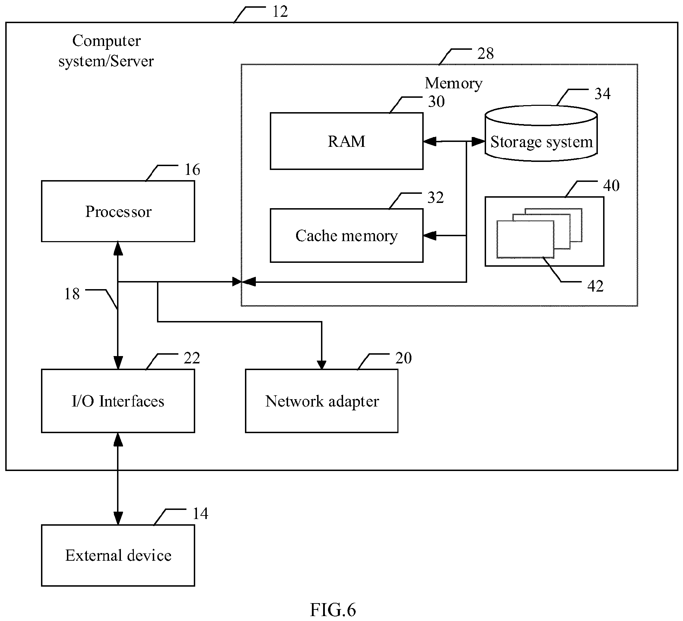

Fig. 6 illustrates a block diagram of an example computer system/server 12 adapted to implement an implementation mode of the present disclosure. The computer system/server 12 shown in Fig. 3 is only an example and should not bring about any limitation to the function and scope of use of the embodiments of the present disclosure.

As shown in Fig. 6, the computer system/server 12 is shown in the form of a general-purpose computing device. The components of computer system/server 12 may include, but are not limited to, one or more processors (processing units) 16, a memory 28, and a bus 18 that couples various system components including system memory 28 and the processor 16.

Bus 18 represents one or more of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system/server 12 typically includes a variety of computer system readable media. Such media may be any available media that is accessible by computer system/server 12, and it includes both volatile and non-volatile media, removable and non-removable media.

Memory 28 can include computer system readable media in the form of volatile memory, such as random access memory (RAM) 30 and/or cache memory 32. Computer system/server 12 may further include other removable/non-removable, volatile/non-volatile computer system storage media. By way of example only, storage system 34 can be provided for reading from and writing to a non-removable, non-volatile magnetic media (not shown in Fig. 6 and typically called a "hard drive"). Although not shown in Fig. 6, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each drive can be connected to bus 18 by one or more data media interfaces. The memory 28 may include at least one program product having a set (e.g., at least one) of program modules that are configured to carry out the functions of embodiments of the present disclosure.

Program/utility 40, having a set (at least one) of program modules 42, may be stored in the system memory 28 by way of example, and not limitation, as well as an operating system, one or more disclosure programs, other program modules, and program data. Each of these examples or a certain combination thereof might include an implementation of a networking environment. Program modules 42 generally carry out the functions and/or methodologies of embodiments of the present disclosure.

Computer system/server 12 may also communicate with one or more external devices 14 such as a keyboard, a pointing device, a display 24, etc.; with one or more devices that enable a user to interact with computer system/server 12; and/or with any devices (e.g., network card, modem, etc.) that enable computer system/server 12 to communicate with one or more other computing devices. Such communication can occur via Input/Output (I/O) interfaces 22. Still yet, computer system/server 12 can communicate with one or more networks such as a local area network (LAN), a general wide area network (WAN), and/or a public network (e.g., the Internet) via network adapter 20. As depicted in Fig. 6, network adapter 20 communicates with the other communication modules of computer system/server 12 via bus 18. It should be understood that although not shown, other hardware and/or software modules could be used in conjunction with computer system/server 12. Examples, include, but are not limited to: microcode, device drivers, redundant processing units, external disk drive arrays, RAID systems, tape drives, and data archival storage systems, etc.

The processor 16 executes various function applications and data processing by running programs stored in the memory 28, for example, implement the method in the embodiment shown in Fig. 1, Fig. 2 or Fig. 3.

The present disclosure meanwhile provides a computer-readable storage medium on which a computer program is stored, the program, when executed by the processor, implementing the method stated in the embodiment shown in Fig. 1, Fig. 2 or Fig. 3.

The computer-readable medium of the present embodiment may employ any combinations of one or more computer-readable media. The machine readable medium may be a machine readable signal medium or a machine readable storage medium. A machine readable medium may include, but not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the text herein, the computer readable storage medium can be any tangible medium that include or store programs for use by an instruction execution system, apparatus or device or a combination thereof.

The computer-readable signal medium may be included in a baseband or serve as a data signal propagated by part of a carrier, and it carries a computer-readable program code therein. Such propagated data signal may take many forms, including, but not limited to, electromagnetic signal, optical signal or any suitable combinations thereof. The computer-readable signal medium may further be any computer-readable medium besides the computer-readable storage medium, and the computer-readable medium may send, propagate or transmit a program for use by an instruction execution system, apparatus or device or a combination thereof.

The program codes included by the computer-readable medium may be transmitted with any suitable medium, including, but not limited to radio, electric wire, optical cable, RF or the like, or any suitable combination thereof.

Computer program code for carrying out operations disclosed herein may be written in one or more programming languages or any combination thereof. These programming languages include an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

In the embodiments provided by the present disclosure, it should be understood that the revealed apparatus and method can be implemented in other ways. For example, the above-described embodiments for the apparatus are only exemplary, e.g., the division of the units is merely logical one, and, in reality, they can be divided in other ways upon implementation.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, Read-Only Memory (ROM), a Random Access Memory (RAM), magnetic disk, or an optical disk.

## Claims

1. A method for autonomous operation of an unmanned logistics vehicle, wherein the method comprises:
obtaining (101), by an unmanned logistics vehicle, a user's cargo transport task, a cargo transport task having a cargo loading location and a cargo unloading location;
planning (102), by the unmanned logistics vehicle, a travel route from a current location to a cargo loading location by setting the current location as a starting point and setting the cargo loading location in the cargo transport task as the destination, and automatically travelling to the cargo loading location according to the travel route; and after determining completion of cargo loading planning a travel route from the cargo loading location to a cargo unloading location by setting the cargo loading location as a starting point and setting a cargo unloading location in the cargo transport task as the destination, and automatically travelling to the cargo unloading location according to the travel route;
controlling (103), by the unmanned logistics vehicle after reaching the destination, a cargo compartment door to open,
controlling the cargo compartment door to close after determining completion of cargo loading;
controlling the cargo compartment door to close after determining completion of cargo unloading;
the method further comprises:
performing, by the unmanned logistics vehicle during autonomous travel, arrival reminding in a predetermined manner when a distance from the destination is determined less than a preset threshold; and
after determining completion of cargo unloading, determining a travel mileage and a cargo weight of cargo transport of this time, and determining a settlement bill according to the travel mileage and the cargo weight, and sending the settlement bill to the user,
wherein the weight of the cargo in obtained by the unmanned logistics vehicle with a weight sensor,
wherein the determining the cargo loading is completed comprises:
receiving a notification of completion of cargo loading sent from a predetermined APP;
or monitoring a predetermined gesture to the effect that the cargo loading is completed;
or receiving a speech instruction to the effect that the cargo loading is completed;
or monitoring that a predetermined button on the unmanned logistics vehicle is pressed.
the determining the completion of cargo unloading comprises:
receiving a notification of completion of cargo unloading sent from a predetermined APP;
or monitoring a predetermined gesture to the effect that the cargo unloading is completed;
or receiving a speech instruction to the effect that the cargo unloading is completed;
or monitoring that a predetermined button on the unmanned logistics vehicle is pressed.

2. The method according to claim 1, wherein
the predetermined manner comprise: a whistling manner, a manner in which a specific indicator lamp is flashing, or a manner in which words are displayed on a screen.

3. An apparatus for autonomous operation of an unmanned logistics vehicle, wherein the apparatus comprises: an obtaining unit (501) and a control unit (502);
the obtaining unit (501) is configured obtain a user's cargo transport task, a cargo transport task having a cargo loading location and a cargo unloading location;
the control unit (502) is configured to plan a travel route from a current location to a cargo loading location by setting the current location as a starting point and setting the cargo loading location in the cargo transport task as the destination, and automatically travelling to the cargo loading location according to the travel route; and after determining completion of cargo loading,
planning a travel route from the cargo loading location to a cargo unloading location by setting the cargo loading location as a starting point and setting a cargo unloading location in the cargo transport task as the destination, and automatically travelling to the cargo unloading location according to the travel route, control the unmanned logistics vehicle to automatically travel to a destination according to the travel route, and after the unmanned logistics vehicle reaches the destination, control a cargo compartment door of the unmanned logistics vehicle to open; control the cargo compartment door to close after determining completion of cargo loading;
control the cargo compartment door to close after determining completion of cargo unloading;
perform arrival reminding in a predetermined manner when a distance from the destination is determined less than a preset threshold; and after determining completion of cargo unloading, determine a travel mileage and a cargo weight of cargo transport of this time, and determine a settlement bill according to the travel mileage and the cargo weight, and send the settlement bill to the user; perform, by the unmanned logistics vehicle during autonomous travel, arrival reminding in a predetermined manner when a distance from the destination is determined less than a preset threshold and after determining completion of cargo unloading, determine a travel mileage and a cargo weight of cargo transport of this time, and determine a settlement bill according to the travel mileage and the cargo weight, and send the settlement bill to the user,
wherein the weight of the cargo in obtained by the unmanned logistics vehicle with a weight sensor,
wherein the control unit (502) determines the cargo loading is completed upon receiving a notification of completion of cargo loading sent from a predetermined APP, or monitoring a predetermined gesture to the effect that the cargo loading is completed, or receiving a speech instruction to the effect that the cargo loading is completed, or monitoring that a predetermined button on the unmanned logistics vehicle is pressed.
the control unit (502) determines the cargo unloading is completed upon receiving a notification of completion of cargo unloading sent from a predetermined APP, or monitoring a predetermined gesture to the effect that the cargo unloading is completed, or receiving a speech instruction to the effect that the cargo unloading is completed, or monitoring that a predetermined button on the unmanned logistics vehicle is presse.

4. The apparatus according to claim 3, wherein
the predetermined manner comprises: a whistling manner, a manner in which a specific indicator lamp is flashing, or a manner in which words are displayed on a screen.

5. A computer-readable storage medium on which a computer program is stored, wherein the program, when executed by a processor, implements the method according to any of claims 1-2.

## Patentansprüche

1. Verfahren zum autonomen Betreiben eines unbemannten Logistikfahrzeugs, wobei das Verfahren die folgenden Schritte aufweist:
Erfassen (101), durch ein unbemanntes Logistikfahrzeug, eines Frachttransportauftrags eines Nutzers, wobei ein Frachttransportauftrag einen Frachtladeort und einen Frachtentladeort aufweist;
Planen (102), durch das unbemannte Logistikfahrzeug, einer Fahrstrecke von einer aktuellen Position zu einem Frachtladeort durch Einstellen der aktuellen Position als einen Startpunkt und Einstellen des Frachtladeorts in dem Frachttransportauftrag als Ziel, und automatisches Fahren zu dem Frachtladeort gemäß der Fahrstrecke; und
nach dem Feststellen des Abschlusses des Ladens der Fracht, Planen einer Fahrstrecke von dem Frachtladeort zu einem Frachtentladeort durch Einstellen des Frachtladeorts als einen Startpunkt und Einstellen eines Frachtentladeorts in dem Frachttransportauftrag als das Ziel, und automatisches Fahren zu dem Frachtentladeort gemäß der Fahrstrecke;
Steuern (103), durch das unbemannte Logistikfahrzeug nach dem Erreichen des Ziels, des Öffnens einer Frachtraumtür;
Steuern des Schließens der Frachtraumtür nach dem Feststellen des Abschlusses des Frachtladens;
Steuern des Schließens der Frachtraumtür nach dem Feststellen des Abschlusses des Frachtentladens;
wobei das Verfahren ferner die folgenden Schritte aufweist:
Durchführen, durch das unbemannte Logistikfahrzeug während der Fahrt, einer Ankunftserinnerung auf eine vorbestimmte Weise, wenn eine Entfernung von dem Ziel als geringer als ein voreingestellter Schwellenwert festgestellt wird; und
nach dem Feststellen des Abschlusses des Frachtentladens, Bestimmen der Fahrtleistung und des Frachtgewichts des aktuellen Frachttransports, und Bestimmen einer Rechnung gemäß der Fahrtleistung und dem Frachtgewicht, und Senden der Rechnung an den Nutzer,
wobei das Gewicht der Fracht durch das unbemannte Logistikfahrzeug mittels eines Gewichtssensors erhalten wird,
wobei das Feststellen des Abschlusses des Frachtladens den folgenden Schritt aufweist:
Empfangen einer von einer vorbestimmten Anwendung gesendeten Frachtladeabschlussnachricht;
oder Überwachen einer vorbestimmten Geste, die den Abschluss des Frachtladens anzeigt;
oder Empfangen eines den Abschluss des Frachtladens angebenden Sprachbefehls;
oder Überwachen, ob ein vorbestimmter Knopf des unbemannten Logistikfahrzeugs gedrückt wird,
wobei das Feststellen des Abschlusses des Frachtentladens den folgenden Schritt aufweist:
Empfangen einer von einer vorbestimmten Anwendung gesendeten Frachtentladeabschlussnachricht;
oder Überwachen einer vorbestimmten Geste, die den Abschluss des Fracht-entladens anzeigt;
oder Empfangen eines den Abschluss des Frachtentladens angebenden Sprachbefehls;
oder Überwachen, ob ein vorbestimmter Knopf des unbemannten Logistikfahrzeugs gedrückt wird.

2. Verfahren nach Anspruch 1, bei welchem die vorbestimmte Art aufweist: eine Art von Signalton, eine Art, auf welche eine bestimmte Anzeigeleuchte blinkt, oder eine Art, auf welche Wörter auf einem Bildschirm angezeigt werden.

3. Vorrichtung für den autonomen Betrieb eines unbemannten Logistikfahrzeugs, wobei die Vorrichtung aufweist:
eine Erfassungseinheit (501) und eine Steuereinheit (502);
wobei die Erfassungseinheit (501) dazu ausgebildet ist, einen Frachttransportauftrag eines Nutzers zu erfassen, wobei ein Frachttransportauftrag einen Frachtladeort und einen Frachtentladeort aufweist;
wobei die Steuereinheit (502) dazu ausgebildet ist, eine Fahrstrecke von einer aktuellen Position zu einem Frachtladeort durch Einstellen der aktuellen Position als einen Startpunkt und Einstellen des Frachtladeorts in dem Frachttransportauftrag als Ziel zu planen, und automatisch zu dem Frachtladeort gemäß der Fahrstrecke zu fahren; und
nach dem Feststellen des Abschlusses des Ladens der Fracht, eine Fahrstrecke von dem Frachtladeort zu einem Frachtentladeort durch Einstellen des Frachtladeorts als einen Startpunkt und Einstellen eines Frachtentladeorts in dem Frachttransportauftrag als das Ziel zu planen, und automatisch zu dem Frachtentladeort gemäß der Fahrstrecke zu fahren, und das unbemannte Logistikfahrzeug derart zu steuern, dass es gemäß der Fahrstrecke automatisch zu einem Zielort fährt, und, nachdem das unbemannte Logistikfahrzeug den Zielort erreicht hat, das Öffnen einer Frachtraumtür des unbemannten Logistikfahrzeugs zu steuern, das Schließen der Frachtraumtür nach dem Feststellen des Abschlusses des Frachtladens zu steuern; das Schließen der Frachtraumtür nach dem Feststellen des Abschlusses des Frachtentladens zu steuern; eine Ankunftserinnerung auf eine vorbestimmte Weise durchzuführen, wenn eine Entfernung von dem Ziel als geringer als ein voreingestellter Schwellenwert festgestellt wird; und nach dem Feststellen des Abschlusses des Frachtentladens, die Fahrtleistung und das Frachtgewicht des aktuellen Frachttransports zu bestimmen, und eine Rechnung gemäß der Fahrtleistung und dem Frachtgewicht zu bestimmen, und die Rechnung an den Nutzer zu senden; durch das unbemannte Logistikfahrzeug während der Fahrt eine Ankunftserinnerung auf eine vorbestimmte Weise durchzuführen, wenn eine Entfernung von dem Ziel als geringer als ein voreingestellter Schwellenwert festgestellt wird; und nach dem Feststellen des Abschlusses des Frachtentladens, die Fahrtleistung und das Frachtgewicht des aktuellen Frachttransports zu bestimmen, und eine Rechnung gemäß der Fahrtleistung und dem Frachtgewicht zu bestimmen, und die Rechnung an den Nutzer zu senden,
wobei das Gewicht der Fracht durch das unbemannte Logistikfahrzeug mittels eines Gewichtssensors erhalten wird,
wobei die Steuereinheit (502) den Abschluss des Frachtladens feststellt durch das Empfangen einer von einer vorbestimmten Anwendung gesendeten Frachtladeabschlussnachricht, oder das Überwachen einer vorbestimmten Geste, die den Abschluss des Frachtladens anzeigt, oder das Empfangen eines den Abschluss des Frachtladens angebenden Sprachbefehls, oder das Überwachen, ob ein vorbestimmter Knopf des unbemannten Logistikfahrzeugs gedrückt wird,
wobei die Steuereinheit (502) den Abschluss des Frachtentladens feststellt durch das Empfangen einer von einer vorbestimmten Anwendung gesendeten Frachtentladeabschlussnachricht, oder das Überwachen einer vorbestimmten Geste, die den Abschluss des Fracht-entladens anzeigt, oder das Empfangen eines den Abschluss des Frachtentladens angebenden Sprachbefehls, oder das Überwachen, ob ein vorbestimmter Knopf des unbemannten Logistikfahrzeugs gedrückt wird.

4. Vorrichtung nach Anspruch 3, bei welcher die vorbestimmte Art aufweist: eine Art von Signalton, eine Art, auf welche eine bestimmte Anzeigeleuchte blinkt, oder eine Art, auf welche Wörter auf einem Bildschirm angezeigt werden.

5. Computerlesbares Speichermedium, auf welchem ein Computerprogramm gespeichert ist, wobei das Programm bei Ausführung durch einen Prozessor das Verfahren nach einem der Ansprüche 1-2 implementiert.

## Revendications

1. Procédé de fonctionnement autonome d'un véhicule logistique sans pilote, dans lequel le procédé comprend :
l'obtention (101), par un véhicule logistique sans pilote, d'une tâche de transport de cargaison d'un utilisateur, d'une tâche de transport de cargaison ayant un emplacement de chargement de cargaison et d'un emplacement de déchargement de cargaison ;
la planification (102), par le véhicule logistique sans pilote, d'un itinéraire de déplacement depuis un emplacement actuel vers un emplacement de chargement de cargaison en définissant l'emplacement actuel en tant que point de départ et en définissant l'emplacement de chargement de cargaison dans la tâche de transport de cargaison en tant que destination, et le déplacement automatique vers l'emplacement de chargement de cargaison selon l'itinéraire de déplacement ; et après la détermination de l'achèvement du chargement de cargaison la planification d'un itinéraire de déplacement depuis l'emplacement de chargement de cargaison à un emplacement de déchargement de cargaison en définissant l'emplacement de chargement de cargaison en tant que point de départ et en définissant un emplacement de déchargement de cargaison dans la tâche de transport de cargaison en tant que destination, et le déplacement automatique vers l'emplacement de déchargement de cargaison selon l'itinéraire de déplacement ;
la commande (103), par le véhicule logistique sans pilote après l'atteinte de la destination, de l'ouverture d'une porte de compartiment de cargaison,
la commande de la fermeture de porte de compartiment de cargaison après la détermination de l'achèvement du chargement de cargaison ;
la commande de la fermeture de porte de compartiment de cargaison après la détermination de l'achèvement du déchargement de cargaison ;
le procédé comprend en outre :
la réalisation, par le véhicule logistique sans pilote pendant un déplacement autonome, d'un rappel d'arrivée d'une manière prédéterminée lorsqu'une distance de la destination est déterminée inférieure à un seuil prédéfini ; et
après la détermination de l'achèvement du déchargement de cargaison, la détermination d'un kilométrage de déplacement et d'un poids de cargaison de transport de cargaison de ce temps, et la détermination d'une facture de règlement selon le kilométrage de déplacement et le poids de cargaison, et l'envoi de la facture de règlement à l'utilisateur,
dans lequel le poids de la cargaison est obtenu par le véhicule logistique sans pilote avec un capteur de poids,
dans lequel la détermination du fait que le chargement de cargaison est achevé comprend :
la réception d'une notification d'achèvement de chargement de cargaison envoyée à partir d'une APP prédéterminé ;
ou la surveillance d'un geste prédéterminé indiquant que le chargement de cargaison est achevé ;
ou la réception d'une instruction vocale indiquant que le chargement de cargaison est terminé ;
ou la surveillance du fait qu'un bouton prédéterminé sur le véhicule logistique sans pilote est pressé.
la détermination de l'achèvement du déchargement de cargaison comprend :
la réception d'une notification d'achèvement de déchargement de cargaison envoyée à partir d'une APP prédéterminée ;
ou la surveillance d'un geste prédéterminé indiquant que le déchargement de cargaison est achevé ;
ou la réception d'une instruction vocale indiquant que le déchargement de cargaison est achevé ;
ou la surveillance du fait qu'un bouton prédéterminé sur le véhicule logistique sans pilote est pressé.

2. Procédé selon la revendication 1, dans lequel
la manière prédéterminée comprend : une manière de sifflement, une manière selon laquelle un voyant lumineux spécifique clignote, ou une manière selon laquelle des mots sont affichés sur un écran.

3. Appareil de fonctionnement autonome d'un véhicule logistique sans pilote, dans lequel l'appareil comprend : une unité d'obtention (501) et une unité de commande (502) ;
l'unité d'obtention (501) est configurée pour obtenir une tâche de transport de cargaison d'un utilisateur, une tâche de transport de cargaison ayant un emplacement de chargement de cargaison et un emplacement de déchargement de cargaison ;
l'unité de commande (502) est configurée pour planifier un itinéraire de déplacement depuis un emplacement actuel vers un emplacement de chargement de cargaison en définissant l'emplacement actuel en tant que point de départ et en définissant l'emplacement de chargement de cargaison dans la tâche de transport de cargaison en tant que destination, et le déplacement automatique vers l'emplacement de chargement de cargaison selon l'itinéraire de déplacement ; et après la détermination de l'achèvement du chargement de cargaison, la planification d'un itinéraire de déplacement depuis l'emplacement de chargement de cargaison vers un emplacement de déchargement de cargaison en définissant l'emplacement de chargement de cargaison en tant que point de départ et en définissant un emplacement de déchargement de cargaison dans la tâche de transport de cargaison en tant que destination, et le déplacement automatique vers l'emplacement de déchargement de cargaison selon l'itinéraire de déplacement, commander le véhicule logistique sans pilote pour se déplacer automatiquement vers une destination selon l'itinéraire de déplacement, et après l'atteinte, par le véhicule logistique sans pilote, de la destination, commander l'ouverture d'une porte de compartiment de cargaison du véhicule logistique sans pilote ; commander la fermeture de la porte de compartiment de cargaison après la détermination de l'achèvement du chargement de cargaison ;
commander la fermeture de la porte de compartiment de cargaison après la détermination de l'achèvement du déchargement de cargaison ;
réaliser un rappel d'arrivée d'une manière prédéterminée lorsqu'une distance depuis la destination est déterminée inférieure à un seuil prédéfini ; et après la détermination de l'achèvement du déchargement de cargaison,
déterminer un kilométrage de déplacement et un poids de cargaison d'un transport de cargaison de ce temps, et déterminer une facture de règlement selon le kilométrage de déplacement et le poids de cargaison, et envoyer la facture de règlement à l'utilisateur ; réaliser, par le véhicule logistique sans pilote pendant un déplacement autonome, un rappel d'arrivée d'une manière prédéterminée lorsqu'une distance depuis la destination est déterminée inférieure à un seuil prédéfini
et après la détermination de l'achèvement du déchargement de cargaison, déterminer un kilométrage de déplacement et un poids de cargaison de transport de cargaison de ce temps, et déterminer une facture de règlement selon le kilométrage de déplacement et le poids de charge, et envoyer la facture de règlement à l'utilisateur,
dans lequel le poids de la cargaison est obtenu par le véhicule logistique sans pilote avec un capteur de poids,
dans lequel l'unité de commande (502) détermine que le chargement de cargaison est achevé lors de la réception d'une notification d'achèvement de chargement de cargaison envoyée à partir d'une APP prédéterminée, ou la surveillance d'un geste prédéterminé indiquant que le chargement de cargaison est terminé, ou la réception d'une instruction vocale indiquant que le chargement de cargaison est terminé, ou la surveillance du fait qu'un bouton prédéterminé sur le véhicule logistique sans pilote est pressé.
l'unité de commande (502) détermine que le déchargement de cargaison est achevé lors de la réception d'une notification d'achèvement de déchargement de cargaison envoyée à partir d'une APP prédéterminée, ou la surveillance d'un geste prédéterminé indiquant que le déchargement de cargaison est achevé, ou la réception d'une instruction vocale indiquant que le déchargement de cargaison est achevé, ou la surveillance du fait qu'un bouton prédéterminé sur le véhicule logistique sans pilote est pressé.

4. Appareil selon la revendication 3, dans lequel
la manière prédéterminée comprend : une manière de sifflement, une manière selon laquelle un voyant lumineux spécifique clignote, ou une manière selon laquelle des mots sont affichés sur un écran.

5. Support de stockage lisible par ordinateur sur lequel un programme informatique est stocké, dans lequel le programme, lorsqu'il est exécuté par un processeur, met en oeuvre le procédé selon l'une quelconque des revendications 1 à 2.
